Europäisches Patentamt

European Patent Office

Office européen des brevets

(19)

(11) EP 0 753 978 A2

(12) EUROPÄISCHE PATENTANMELDUNG

(43) Veröffentlichungstag:
15.01.1997 Patentblatt 1997/03

(51) Int. Cl.$^6$: H04Q 7/38, G01C 21/20,
G05D 1/02

(21) Anmeldenummer: 96109952.0

(22) Anmeldetag: 20.06.1996

(84) Benannte Vertragsstaaten:
DE ES FR GB IT SE

(30) Priorität: 08.07.1995 DE 19524927

(71) Anmelder: Alcatel SEL Aktiengesellschaft
D-70435 Stuttgart (DE)

(72) Erfinder: König, Wolfgang
74360 Ilsfeld (DE)

(74) Vertreter: Knecht, Ulrich Karl, Dipl.-Ing. et al
Alcatel Alsthom
Intellectual Property Department,
Postfach 30 09 29
70449 Stuttgart (DE)

(54) **Zielführung eines Teilnehmers innerhalb eines SDMA-Mobil-Funknetzes**

(57) Zur Zielführung eines Teilnehmers innerhalb eines SDMA - Mobilfunknetzes wird ein Verfahren und eine danach arbeitende prozessorgesteuerte Einrichtung (BSC) vorgeschlagen.

Diese Einrichtung enthält eine Nachrichtenübertragungsvorrichtung (IF1) zum Empfang einer Nachricht, die den vom Teilnehmer gewünschten Zielort (DES) angibt, und einen Mikroprozessor, der mittels Auswertung von Richtungs- und Entfernungsangaben ($\alpha$,R) den momentanen Aufenthaltsort (LOC) des Teilnehmers bestimmt.

Die prozessorgesteuerte Einrichtung (MSC) enthält weiterhin eine Datenübertragungsvorrichtung (IF2), mittels der sie von einer Datenbank (DB) Information (INFO) abruft, die eine Wegstrecke vom Aufenthaltsort (LOC) zum Zielort (DES) angibt. Diese Information wird an das Mobilfunkendgerät (MS) des Teilnehmers in Form einer Kurznachricht gesendet.

Fig.2

## Beschreibung

Die Erfindung betrifft ein Verfahren zur Zielführung eines Teilnehmers innerhalb eines SDMA - Mobilfunknetzes sowie eine prozessorgesteuerte Einrichtung zur Durchführung des Verfahrens.

Aus Wo 93/12590 ist ein SDMA - Mobilfunknetz (SDMA Space Division Multiple Access) bekannt, bei dem eine Funkfeststation mit mehreren Mobilfunkendgeräten gleichzeitig auf einem Funkfrequenzpaar Nachrichten austauscht. Dazu enthält die dortige Funkfeststation eine phasengesteuerte Gruppenantenne, bei der durch ein komplexe Gewichtung der Sende- und Empfangssignale, diese gerichtet gesendet bzw. empfangen werden. Die SDMA - Funkverbindungen zwischen der Funkfeststation und den Mobilfunkstationen werden somit räumlich getrennt. Ein sogenannter "SDMA Controller" der in die Funkfeststation integriert ist, errechnet aus den komplexen Gewichten die verschiedenen Raumrichtungen, aus den die Mobilfunkendgeräte senden ("DOA: Direction of Arrival"). Weiterhin werden durch Messungen der Funksignallaufzeiten ("TOA: Time of Arrival") die Entfernungen zwischen der Funkfeststation und den einzelnen Mobilfunkendgeräten ermittelt. Wie in Wo 93/12590 auf Seite 22 beschrieben, errechnet der "SDMA Controller" die Raumrichtungen und Entfernungen, um die Positionen der einzelnen Mobilfunkendgeräte und damit die Aufenthaltsorte der Teilnehmer zu bestimmen. Demnach entspricht die dortige Funkfeststation mit "SDMA - Controller" einer prozessorgesteuerten Einrichtung mit einem Rechnermittel, das Richtungs- und Entfernungsangaben auswertet, die jeweils einer SDMA - Funkverbindung zugeordnet sind, zur Bestimmung des momentanen Aufenthaltsortes des entsprechenden Teilnehmers.

Aufgabe der Erfindung ist es, eine prozessorgesteuerte Einrichtung der eingangs genannten Art zur Durchführung eines solchen Verfahrens auszubauen, das eine Zielführung eines Teilnehmers innerhalb eines SDMA - Mobilfunknetzes erlaubt.

Gelöst wird diese Aufgabe durch eine prozessorgesteuerte Einrichtung und ein damit durchgeführtes Verfahren mit den Merkmalen nach einem der nebengeordneten Patentansprüche. Danach wird erfindungsgemäß vorgeschlagen, die prozessorgesteuerte Einrichtung der eingangs genannten Art mit einer Nachrichtenübertragungsvorrichtung auszustatten, die eine vom Teilnehmer gesendete Nachricht, welche einen Zielort angibt, empfängt und mit einer Datenübertragungsvorrichtung auszustatten, die von einer Datenbank dort gespeicherte Informationsdaten abruft, welche eine Wegstrecke vom Aufenthaltsort des Teilnehmers zu diesem Zielort angeben und welche die Nachrichtenübertragungsvorrichtung an das Mobilfunkgerät des Teilnehmers sendet.

Durch diese erfindungsgemäßen Maßnahmen wird für die Teilnehmer des SDMA - Mobilfunknetzes ein Zielführungsdienst angeboten, bei dem derjenige Teilnehmer, welcher eine Zielführung wünscht, mit Information versorgt wird, die ihm eine Wegstrecke zum gewünschten Zielort angibt. Dieser Zielführungsdienst ist besonders für einen solchen Teilnehmer interessant, der in einer für ihm fremden Umgebung, eine schnelle und umfassende Wegeauskunft in einer ihm verständlichen Sprache wünscht. Die Erfindung macht sich die Erkenntnis zu nutzen, daß auf die ohnehin für den Aufbau und die Aufrechterhaltung einer SDMA - Funkverbindung benötigen Richtungs- und Entfernungsangaben auch zur Zielführung eines Teilnehmers zugegriffen wird. Entweder wird dabei auf die Richtungs- und Entfernungsangaben zugegriffen, die in einer Funkfeststation vorliegen, oder es wird auf Richtungsangaben oder Entfernungsangaben zugegriffen, die in mindestens zwei Funkfeststationen vorliegen.

Vorteilhafte Ausgestaltungen der Erfindung sind den Unteransprüchen zu entnehmen.

Im weiteren wird die Erfindung anhand eines Ausführungsbeispiels und unter Zuhilfenahme folgender Fig. näher beschrieben:

Fig. 1 die schematisch den Aufbau eines erfindungsgemäß ausgestattetes Mobilfunknetz zeigt;

Fig. 2 die das Blockschaltbild einer prozessorgesteuerten Einrichtung gemäß der Erfindung zeigt; und

Fig. 3 die schematisch den Ablaufplan eines erfindungsgemäßen Verfahrens zeigt.

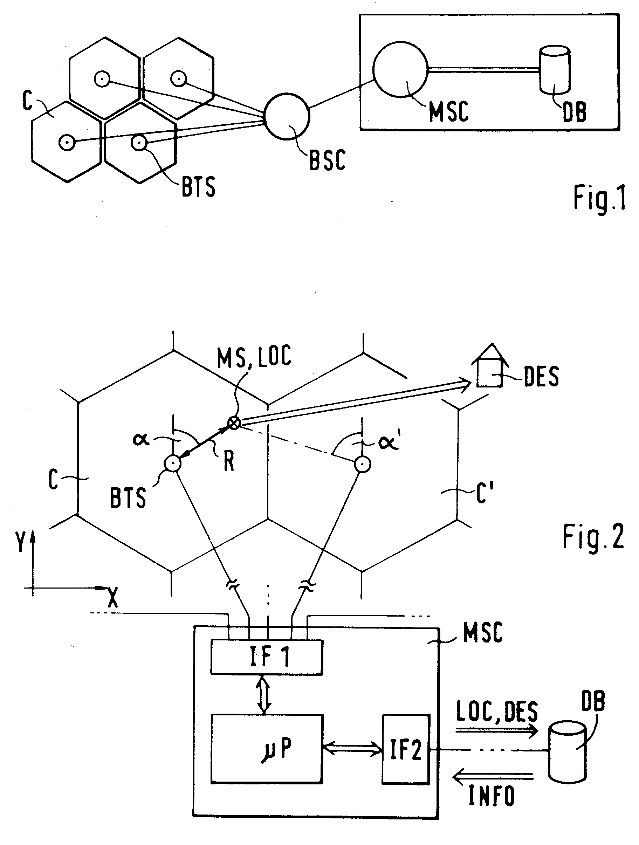

Die in Fig. 1 schematisch dargestellte SDMA - Mobilfunknetz hat mehrere Funkzellen C, die jeweils von einer Funkfeststation BTS versorgt werden. Die Funkfeststationen sind mit einer Funkfeststationssteuerung BSC verbunden, die den Aufbau von SDMA - Funkverbindungen zwischen den Funkfeststationen und Mobilfunkendgeräten steuert, welche sich in den Funkzellen C befinden. Die Funkfeststationssteuerung BSC ist über eine Mobilfunkvermittlungsstelle MSC, die das SDMA - Mobilfunknetz mit einem öffentlichem Telefonnetz verbindet und die Teilnehmerdaten verwaltet, mit einer Datenbank DB verbunden, in der erfindungsgemäß Informationsdaten gespeichert sind für eine Zielführung des Teilnehmers entlang einer Wegstrecke, die an einem vom Teilnehmer gewünschten Zielort endet. Erfindungsgemäß bildet diese Mobilfunkvermittlungsstelle auch eine prozessorgesteuerte Einrichtung MSC zur Zielführung eines Teilnehmers, der ein Mobilfunkendgerät mit sich führt.

Wie in Fig. 2 schematisch dargestellt, enthält die prozessorgesteuerte Einrichtung MSC ein Rechnermittel µP sowie eine damit verbundene Nachrichtenübertragungsvorrichtung IF1 und eine ebenfalls damit verbundene Datenübertragungsvorrichtung IF2. Das hier verwendete Rechnermittel ist ein Mikroprozessor von Typ "Pentium" (Hersteller Intel Corp.). Die Übertragungsvorrichtungen IF1 und IF2 sind Schnittstellenschaltungen für eine bidirektionale Signalübertragung zwischen dem Mikroprozessor µP und den Funkfeststationen BTS bzw. der Datenbank DB.

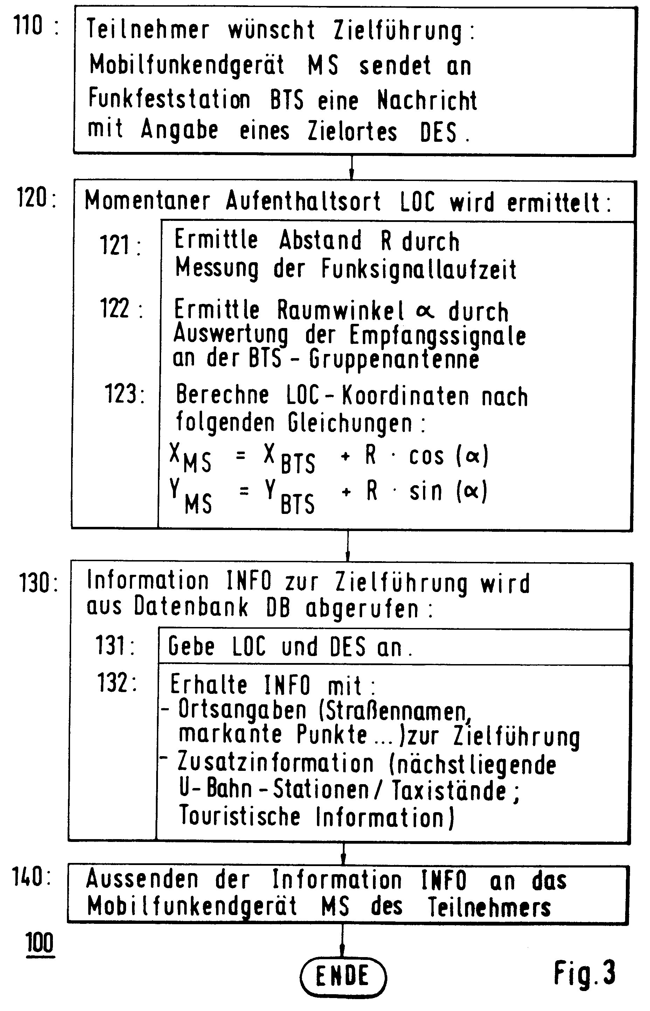

Zur weiteren Beschreibung der Erfindung wird nun auch das in Fig. 3 dargestellte Ablaufdiagramm herangezogen:

In diesem Beispiel wird von einem Teilnehmer ausgegangen, der nur seine Muttersprache Deutsch beherrscht und sich auf einer Geschäftsreise durch Japan befindet. Er ist gerade mit dem Zug am Hauptbahnhof in Osaka angekommen und sucht nun ein Hotel mit internationalem Standard und wenn möglich, mit deutschsprachigem Servicepersonal. Der Teilnehmer, der eine Zielführung wünscht, sendet zunächst mit Hilfe seines Mobilfunkendgerätes MS eine Nachricht an die nächstliegende Funkfeststation BTS (Schritt 110): Über die Tastatureingabe "0123-49" an seinem Mobilfunkendgerät MS nimmt der Teilnehmer Verbindung auf zum örtlichem SDMA - Mobilfunknetz und ordert den dortigen Zielführungsdienst (Kennung "0123") in deutscher Sprache (Kennung "-49").

Die prozessorgesteuerte Einrichtung MSC startet daraufhin ein interaktives Abfrageprogramm, bei dem Nachrichten im Kurznachrichtenprotokoll zwischen dem Mobilfunkendgerät MS und der Nachrichtenübertragungsvorrichtung IF1 ausgetauscht werden. Zunächst wird an den Teilnehmer in deutscher Sprache eine Kurznachricht gesendet, die die Meldung "Willkommen beim Zielführungsdienst Osaka" und die Abfrage "Bitte geben Sie gewünschten Zielort ein" enthält. Auf die Tastatureingabe "Hotel" durch den Teilnehmer antwortet die prozessorgesteuerte Einrichtung BSC mit der Abfrage: "Bitte wählen Sie **N**ame / **K**ategorie / **L**age des Hotels". Daraufhin gibt der Teilnehmer den Buchstaben "K" ein, worauf im Programm die Abfrage "Kategorie: 1 = Spitzenstandard /2 = gehobener Standard /3 = einfacher Standard - **I**nternational oder **J**apanisch" folgt.

Durch Eingabe der Tastenfolge "2, I" wir die gewünschte Kategorie angegeben. Die prozessorgesteuerte Einrichtung MSC hat nun mit Hilfe seiner Nachrichtenübertragungsvorrichtung IF1 alle Teile der Nachricht und damit alle Angaben zum Zielort DES empfangen.

In einem Schritt 120 ermittelt die prozessorgesteuerte Einrichtung BSC nun den momentanen Aufenthaltsort LOC des Teilnehmers. Dazu wird zunächst eine Messung der Funksignallaufzeit durchgeführt (Teilschritt 121), um den Abstand R zwischen dem Mobilfunkendgerät MS und der Funkfeststation BTS zu ermitteln. In diesem Beispiel beträgt die gemessene Funksignallaufzeit 24 ms, was einen Abstand R = 2 km entspricht. In einem Teilschritt 122 werden dann die Empfangssignale ausgewertet, die eine mit der Funkfeststation BTS verbundene phasengesteuerte Gruppenantenne empfängt. Aus einer Auswertung der komplexen Gewichte läßt sich entsprechend der in Wo 93/12590 beschriebenen Methode ein Raumwinkel α bestimmen, der die Empfangsrichtung zu dem vom Mobilfunkendgerät MS gesendeten Funksignal angibt. In diesem Beispiel ist α = 45°, was hier der Kompaßrichtung "Nord-Ost" entspricht.

Der Mikroprozessor µP errechnet nun in einem Teilschritt 123 aus dem ermitteltem Abstand R, aus dem Raumwinkel α und aus den Standort - Koordinaten $X_{BTS}$ und $Y_{BTS}$ der Funkfeststation BTS die karthesischen Koordinaten $X_{MS}$ und $Y_{MS}$, die den momentanen Aufenthaltsort LOC angeben. Die Berechnung erfolgt nach folgenden Gleichungen:

$$X_{MS} = X_{BTS} + R \cdot \cos(\alpha)$$

$$Y_{MS} = Y_{BTS} + R \cdot \sin(\alpha).$$

Die prozessorgesteuerte Einrichtung MSC verfügt nun über alle Angaben zum Aufenthaltsort LOC und zum Zielort DES und legt diese in einen mit dem Mikroprozessor µP verbundenen Speicher (nicht dargestellt) ab.

Bei einer kontinuierlichen Strahlschwenkung, die von der Funkfeststation BTS oder von der Funkfeststationssteuerung BSC durchgeführt wird, sind die obigen Parameter R (Abstand) und α (Raumwinkel) bereits verfügbar, sodaß die Teilschritte 121 und 122 entfallen. Die durch die prozessorgesteuerte Einrichtung MSC durchgeführte Ermittlung des Aufenthaltsorts LOC besteht somit im wesentlichen aus dem Teilschritt 123, bei dem die Koordinaten des momentanen Aufenthaltsortes LOC bestimmt werden.

In einem Schritt 130 wird nun Information INFO zur Zielführung aus einer mit der Datenübertragungsvorrichtung IF2 verbundenen Datenbank DB abgerufen. Dazu sendet die Datenübertragungsvorrichtung IF2, die Angaben LOC und DES entsprechend einem Datenübertragungsprotokoll an die Datenbank DB (Teilschritt 131).

Dort sind zahlreiche Information, wie Ortsangaben, Straßennamen etc., gespeichert, die für die Zielführung des Teilnehmers benötigt werden. Diese Informationen sind mit denen vergleichbar, die einer Straßenkarte oder einem Stadtplan entnehmbar sind. Weiterhin sind in der Datenbank DB Zusatzinformationen gespeichert, die die örtlichen Gegebenheiten am Aufenthaltsort LOC beschreiben um dem Teilnehmer die Orientierung zu erleichtern. Weiterhin werden ihm verschiedene Möglichkeiten aufgezeigt, wie er schnell den gewünschten Zielort DES erreichen kann. Die Datenbank DB gibt aufgrund der Eingaben LOC und DES die Informationen an, die mindestens eine Wegstrecke zwischen dem Aufenthaltsort LOC und dem Zielort DES beschreiben, und - falls vorhanden - die oben beschriebenen Zusatzinformationen. Zusammen bilden diese Informationen die aus der Datenbank DB abgerufenen Informationsdaten INFO.

In einem Schritt 140 sendet die prozessorgesteuerte Einrichtung MSC mit Hilfe seiner Nachrichtenübertragungsvorrichtung IF1 diese Informationsdaten INFO in Form einer Kurznachricht an das Mobilfunkendgerät MS. In diesem Beispiel enthält die Kurznachricht folgende Meldung:
"Weg zum > Palace Hotel <: 1.) Bahnhof, Ausgang Nord 2.) rechts entlang der Straße...
.....
8.)Zusatzinfo: Fahrt zum Hotel mit U-Bahn, Linie 7..."

Im obigen Beispiel werden lediglich Textdaten in der Form von Kurznachrichten übertragen. Es ist auch denkbar Bilddaten zu übertragen, falls das Mobilfunkendgerät ein grafikfähiges Anzeigefeld hat. Somit könnten dem Teilnehmer etwa Bildausschnitte aus dem Stadtplan angezeigt werden. Dazu könnten erläuternde Schriftzüge in der vom Teilnehmer gewünschten Sprache angezeigt werden. Weiterhin wäre es denkbar die Ortsangaben, Straßennamen sowie Bezeichnungen wie "Taxi" oder "Bus" usw. sowohl in der Originalsprache und in der vom Teilnehmer gewünschten Sprache anzuzeigen. Dadurch könnte der Teilnehmer diese Bezeichnungen in der Originalsprache lesen und sich besser in der fremden Umgebung orientieren.

Es ist auch denkbar die Informationsdaten innerhalb der prozessorgesteuerten Einrichtung in Sprachdaten umzuwandeln. Diese werden dann von der Nachrichtenübertragungseinrichtung als Sprachsignale (synthetische Sprache) über einen Sprachkanal an das Mobilfunkendgerät gesendet. Zu dem oben beschriebenen Verfahrensschritt 130, bei dem zur Bestimmung des Aufenthaltsortes des Teilnehmers die Entfernung und der Raumwinkel bezüglich der einen Funkfeststation ermittelt werden, sind folgende Varianten denkbar, die einer Kreuzpeilung gleichkommen: Zum einen werden die Entfernungen zu verschiedenen, zueinander benachbarten Funkfeststationen ermittelt. Der Schnittpunkt aller Entfernungsradien gibt den gesuchten Aufenthaltsort an. Zum anderen werden die Raumwinkel von verschiedenen, zueinander benachbarten Funkfeststationen ermittelt. Der Schnittpunkt aller Raumwinkel - Strahlen gibt den gesuchten Aufenthaltsort an. Eine derartige Kreuzpeilung erhöht die Genauigkeit des Verfahrens zur Bestimmung des Aufenthaltsorts.

Die prozessorgesteuerte Einrichtung kann auch zusammen mit der Datenbank in eine Einheit integriert werden und somit eine Dienstezentrale bilden. Zur Entlastung der prozessorgesteuerten Einrichtung bei der Ermittlung des Aufenthaltsortes kann bereits die im SDMA - Mobilfunksystem vorhandene Prozessorkapazität, wie z.B. Prozessoren innerhalb der Funkfeststeuerung oder innerhalb einer digitalen Mobilfunkvermittlungsstelle, genutzt werden.

Die Erfindung ist nicht auf die Zielführung von Personen an sich beschränkt. Vielmehr sind auch Ausführungsbeispiele denkbar, bei denen Fahrzeuge automatisch geführt werden. Dazu werden die von der Datenbank abgerufenen Informationsdaten in Steuersignale für die Fahrzeuglenkung gewandelt.

## Patentansprüche

1. Verfahren (100) zur Zielführung eines Teilnehmers innerhalb eines SDMA - Mobilfunknetzes mit folgenden Schritten:

   (110):  Von einem Mobilfunkendgerät (MS) des Teilnehmers wird an eine Funkfeststation (BTS) des SDMA - Mobilfunknetzes eine Nachricht gesendet, die einen Zielort (DES) angibt;

   (120):  der momentane Aufenthaltsort (LOC) des Teilnehmers wird bestimmt mittels Auswertung von Richtungs- und/oder Entfernungsangaben ($\alpha$R), die einer SDMA - Funkverbindung zwischen dem Mobilfunkendgerät (MS) und zumindest der einen Funkfeststation (BTS) des SDMA - Mobilfunksystems zugeordnet sind;

   (130):  aus einer Datenbank (DB) werden Informationsdaten (INFO) abgerufen, die eine Wegstrecke angeben, welche vom momentanen Aufenthaltsort (LOC) zum Zielort (DES) führt, und

   (140):  die Informationsdaten (INFO) werden an das Mobilfunkendgerät (MS) des Teilnehmers gesendet.

2. Verfahren (100) nach Anspruch 1, bei dem der Schritt (120) zur Bestimmung des Aufenthaltsortes (LOC) folgende Teilschritte umfaßt:

   (121):  Durch eine Messung der Funksignallaufzeit wird ein Abstand R ermittelt, der die Entfernung des Mobilfunkendgerätes (MS) zu der Funkfeststation (BTS) angibt, und

   (122):  durch eine Auswertung von Empfangssignalen, die eine mit der Funkfeststation (BTS) verbundene Gruppenantenne empfängt, wird ein Raumwinkel ($\alpha$) ermittelt, der die Empfangsrichtung für die von dem Mobilfunkendgerät (MS) gesendeten Funksignale angibt.

3. Verfahren (100) nach Anspruch 1, bei dem der Schritt (130) zum Abrufen der Information (INFO) folgende Teilschritte umfaßt:

   (131)   Der momentane Aufenthaltsort (LOC) und der Zielort (DES) wird an die Datenbank (DB) gesendet und

   (132):  die Information (INFO) wird durch Verknüpfung von Daten erzeugt, die in der Datenbank gespeichert sind und die Ortangaben zur Zielführung sowie zusätzliche Angaben zur Umgebung des momentanen Aufenthaltsortes (LOC) enthalten.

4. Verfahren nach Anspruch 1, bei dem der Schritt zur Bestimmung des Aufenthaltsortes folgende Teilschritte umfaßt:

- Durch eine erste Messung der Funksignallaufzeit wird ein erster Abstandsradius ermittelt, der die Entfernung des Mobilfunkendgerätes zu der Funkfeststation angibt, und

- durch eine zweite Messung der Funksignallaufzeit wird ein zweiter Abstandsradius ermittelt, der die Entfernung zu einer zu der Funkfeststation benachbarten Funkfeststation angibt.

5. Verfahren nach Anspruch 1, bei dem der Schritt zur Bestimmung des Aufenthaltsortes folgende Teilschritte umfaßt:

- Durch eine erste Auswertung von Empfangssignalen, die eine mit der Funkfeststation verbundene Gruppenantenne empfängt, wird ein erster Raumwinkel ermittelt, der eine erste Empfangsrichtung für die von dem Mobilfunkendgerät gesendeten Funksignale angibt, und

- durch eine zweite Auswertung von Empfangssignalen, die eine mit einer zu der Funkfeststation benachbarten Funkfeststation verbundene Gruppenantenne empfängt, wird ein zweiter Raumwinkel ermittelt, der eine zweite Empfangsrichtung für die von dem Mobilfunkendgerät gesendeten Funksignale angibt.

6. Prozessgesteuerte Einrichtung (MSC) zur Zielführung eines Teilnehmers innerhalb eines SDMA - Mobilfunknetzes mit einem Rechnermittel (μP), das mit mindestens einer Funkfeststation (BTS) des Mobilfunknetzes verbunden ist und das durch eine Auswertung von Richtungs- und/oder Entfernungsangaben (αR), die einer SDMA - Funkverbindung zwischen der mindestens einen Funkfeststation (BTS) und einem Mobilfunkendgerät (MS) des Teilnehmers zugeordnet sind, den momentanen Aufenthaltsort (LOC) dieses Teilnehmers bestimmt, **gekennzeichnet durch** eine Nachrichtenübertragungsvorrichtung (IF1), die das Rechnermittel (μP) mit der mindestens einen Funkfeststation (BTS) verbindet und die eine vom Teilnehmer gesendete Nachricht empfängt, die einen Zielort (DES) angibt, und durch eine Datenübertragungsvorrichtung (IF2), die das Rechnermittel (μP) mit einer Datenbank (DB) verbindet und die dort gespeicherten Informationsdaten (INFO) abruft, die eine Wegstrecke vom Aufenthaltsort (LOC) zum Zielort (DES) angeben und die die Nachrichtenübertragungsvorrichtung (IF1) an das Mobilfunkendgerät (MS) des Teilnehmers sendet.

7. Prozessorgesteuerte Einrichtung (MSC) nach Anspruch 6, dadurch gekennzeichnet, daß die Nachrichtenübertragungsvorrichtung (IF1) die Informationsdaten (INFO) zum Senden an das Mobilfunkendgerät (MS) in ein Kurznachrichtenprotokoll umsetzt.

8. Prozessorgesteuerte Einrichtung (MSC) nach Anspruch 6, dadurch gekennzeichnet, daß die Nachrichtenübertragungsvorrichtung (IF1) einen Sprachsynthesiser enthält, der die Informationsdaten (INFO) in Sprachsignale umsetzt, um diese an das Mobilfunkendgerät (MS) zu senden.

9. Prozessorgesteuerte Einrichtung (MSC) nach Anspruch 6, dadurch gekennzeichnet, daß die Dateninformationsvorrichtung (IF2) von der Datenbank (DB) Zusatzinformation abruft, die Angaben zu einem öffentlichen Verkehrsmittel enthalten, mit dem der Teilnehmer vom Aufenthaltsort (LOC) zum Zielort (DES) gelangen kann.

Fig.1

Fig.2

110 :
| Teilnehmer wünscht Zielführung:
Mobilfunkendgerät MS sendet an
Funkfeststation BTS eine Nachricht
mit Angabe eines Zielortes DES.

120 :
Momentaner Aufenthaltsort LOC wird ermittelt:

121 : Ermittle Abstand R durch
Messung der Funksignallaufzeit

122 : Ermittle Raumwinkel $\alpha$ durch
Auswertung der Empfangssignale
an der BTS - Gruppenantenne

123 : Berechne LOC - Koordinaten nach
folgenden Gleichungen:

$$X_{MS} = X_{BTS} + R \cdot \cos(\alpha)$$
$$Y_{MS} = Y_{BTS} + R \cdot \sin(\alpha)$$

130 :
Information INFO zur Zielführung wird
aus Datenbank DB abgerufen:

131 : Gebe LOC und DES an.

132 : Erhalte INFO mit:
- Ortsangaben (Straßennamen,
markante Punkte ...)zur Zielführung
- Zusatzinformation (nächstliegende
U-Bahn-Stationen / Taxistände;
Touristische Information)

140 :
Aussenden der Information INFO an das
Mobilfunkendgerät MS des Teilnehmers

100

( ENDE )

Fig. 3